Europäisches Patentamt

European Patent Office

Office européen des brevets

(11) Publication number: **0 428 338 A2**

# EUROPEAN PATENT APPLICATION

(21) Application number: 90312241.4

(51) Int. Cl.5: **B60K 31/02**, G05B 9/02

(22) Date of filing: **08.11.90**

(30) Priority: **16.11.89 GB 8925930**

(43) Date of publication of application:
**22.05.91 Bulletin 91/21**

(84) Designated Contracting States:
**DE FR GB IT**

(71) Applicant: **LUCAS INDUSTRIES PUBLIC LIMITED COMPANY**
**Brueton House, New Road**
**Solihull, West Midlands B91 3TX(GB)**

(72) Inventor: **Ironside, John Micael**
**17, Green Meadow Road**
**Birmingham, B29 4DD(GB)**
Inventor: **Cheel, John Nicholas**
**36, Pereira Road**
**Birmingham, B17 9JN(GB)**

(74) Representative: **Robinson, John Stuart et al**
**Marks & Clerk Alpha Tower Suffolk Street**
**Queensway**
**Birmingham, B1 1TT(GB)**

(54) Transducer monitoring apparatus and method.

(57) In order to monitor the operation of two brake pedal switches (A, B), an aspect of vehicle performance which should only occur during braking is detected (20, 22, 23, 24, 26). When this aspect is detected, the status of the brake pedal switches (A, B) is checked for consistency. If at least one of the switches does not indicate that the brake has been applied, cruise control of the vehicle is suspended until repairs have been effected. Such a technique can be applied to transducers other than brake switches and to systems other than vehicles, and allows dormant failures to be detected.

FIG.5.

## TPANSDUCER MONITORING APPARATUS AND METHOD.

The present invention relates to a transducer monitoring apparatus and method. Such an apparatus and method may be used to monitor the operation of a transducer in many different types of system, for instance to detect dormant faults or failures in transducers which might otherwise go undetected and could, in certain circumstances and in certain types of systems, lead to a catastrophic failure or a dangerous mode of operation.

A typical example of a system to which such an apparatus and method may be applied is a cruise control system in a vehicle, such as a car driven by an internal combustion engine. Cruise control systems have been used for many years to relieve the driver of a motor vehicle of the task of regulating vehicle speed. A typical system comprises an actuator capable of opening an engine throttle further than an angle directly comnmended by the driver via an accelerator pedal, a road speed sensor to provide a feed back signal, a control unit, and a set of driver-actuated command signals. The command signals generally include switches for commanding the speed to be held fixed, incremented, and decremented. Manually operated switches are also generally provided for enabling and disabling the cruise control system, for temporily suspending cruise control, and for subsequently resuming cruise control. Further switches are normally provided to suspend cruise control when the driver attempts to alter the setting of the transmission (change gear) or apply a brake (foot brake).

In order to provide proper control of the vehicle, a signal from the brake switch is supplied to the control unit so as to command the suspension of cruise control. In some known cruise control systems, in order to ensure safe operation, the power supply to the actuator is supplied via the brake switch. Thus, the actuator is prevented from producing additional throttle opening when the brake is applied, even if the control unit has developed a fault and would otherwise attempt to hold the throttle open.

Servo control systems for engine throttles have recently been developed in order to provide a desirable accelerator pedal sensation with good isolation from engine vibration and so as to facilitate trimming the response of an internal combustion engine to the accelerator. Such systems allow additional features, such as cruise control and traction (wheel slip) control, to be incorporated simply and safely, since a single actuator and position controller is responsible for throttle positioning in all modes of operation. Thus, vehicle acceleration disturbances and mechanical complexity associated with changing between cruise control and accelerator pedal control can be minimised. A position servo control loop can be commanded to move the throttle smoothly, for instance from a position required to maintain vehicle speed to a position corresponding to the accelerator pedal position. However, with systems of this type, it is no longer possible to supply power to the actuator via the normally two brake switches actuated upon depression of the brake pedal, because the actuator is required to act under accelerator pedal control.

US 4522280 provides a cruise control system in which the switch which is actuated by the brake pedal and which controls brake lights at the rear of the vehicle is used to supply a signal for disengaging cruise control when the brake pedal is depressed. Such an arrangement can be unreliable. For instance, when a trailer is connected to the vehicle with an electrical connection between the brake light switch and additional brake lights on the trailer, a fuse which protects the vehicle brake light circuit can be blown so that brake pedal depression signals to the cruise control are lost. This patent is specifically concerned with the provision of an after market cruise control installation, and it is therefore inconvenient to avoid this problem by modifying the vehicle to incorporate additional brake pedal, operated switches. The system of this patent therefore monitors the voltage across the brake light switch with an exclusive NOR gate so that any malfunction, for instance caused by a blown fuse, causes the cruise control system to be disengaged. This patent also describes an arrangement in which, if vehicle speed falls from a peak value after a resume switch of the cruise control system has been actuated, it is assumed that the brakes have been applied and the cruise control is disconnected.

US 4434469 describes a cruise control system having a switch operated by depression of a vehicle accelerator for up-dating the selected cruise speed by making it equal to the current speed whenever the accelerator is depressed. A possible problem could arise if this switch were to fail in such a way as to provide a permanent indication that the accelerator pedal was depressed. When the accelerator pedal is subsequently released, there would be a danger of an unintended acceleration. The arrangement of this patent therefore disengages the cruise control if a brake depression switch is actuated, even if the accelerator switch is also actuated. However, this patent does not deal with a situation in which the brake switch fails.

US 4355607 discloses a cruise control system which detects accidental engine load removal in order to disengage the cruise control so as to prevent excess engine speed. For instance, with cruise control selected, when a manual or automatic transmission is disengaged, the vehicle speed generally falls and the cruise control attempts to compensate for this by opening the engine throttle. Left unchecked, the engine speed would increase beyond its safe maximum level, thus causing damage to or destruction of the engine. This is prevented by detecting an increase in engine speed and using this to disengage cruise control.

Although coincident failures arising from independent causes are unlikely, it is possible in a redundant system for a first failure to lie dormant and undiscovered for a long period of time until a second failure occurs. The part of the system which failed first is then unable to correct or compensate for the second failure.

Thus in the case of cruise control systems, it is possible to provide two switches actuated by depression of a vehicle brake pedal so as to supply independent signals to a control unit in order to reduce the risk of the cruise control functions remaining active when the brakes are applied. Any one switch indicating that the brakes are applied can be used to disengage or suspend cruise control operation even if the other switch shows that the brakes are released because of a failure. However, if the operational switch subsequently fails in the same way such that it indicates that the brakes are released, then the cruise control would remain active and the engine throttle would open to attempt to maintain the vehicle speed at the selected value against the action of the brakes.

In theory, it is possible to detect and compensate for a dormant failure of this type, for instance by arranging the control unit to detect that only one switch shows that the brakes are applied and thus disable the cruise control until the fault has been remedied. However, in practice, this is not possible because the two switches cannot be mounted in such a way that they are always actuated at exactly the same amount of brake pedal depression. A driver will occasionally hold the brake pedal at a position which is intermediate between the positions at which the switches are actuated and, although such a situation will normally only last for a very short period of time, for instance a fed milliseconds, there are circumstances in which this condition might persist for much greater periods of time, for instance for many minutes.

According to a first aspect of the invention, there is provided an apparatus for monitoring operation of a transducer sensitive to a first control input of a system, comprising means for determining an aspect of performance of the system which aspect is influenced by the first control input, means for comparing an output of the transducer representing a status of the first control input with the aspect of system performance determined by the determining means, and means for producing a predetermined response when the comparison of the comparing means represents an inconsistency between the status of the first control input and the aspect of system performance.

The inconsistency may, for instance, indicate the failure of a signal from the transducer.

It is thus possible to provide an apparatus which determines when an aspect of system performance should correspond to a particular status of the first control input. The apparatus compares this against the first control input status determined by the transducer and, if there is an inconsistency, can provide a suitable response. Thus, although the output of the transducer may not be required for monitoring or control of the system, the apparatus can detect a fault in or failure of the transducer and thus take any suitable action. A fault which would otherwise lie dormant can therefore be detected at the earliest opportunity and suitable remedial action can be taken.

The predetermined response producing means may be arranged to provide a fault indication, which may be visible and/or audible, in order to give warning or advance warning of an undesirable or dangerous situation. Alternatively, or additionally, the predetermined response producing means may be arranged to disengage or disable a mode of operation of the system. Preferably, the predetermined response producing means prevents the mode of operation from being re-enabled until a manual reset signal has been received, for instance following remedial action to replace a faulty transducer. Preferably, the mode of operation which is disabled by the predetermined response producing means is a secondary mode of operation, the system being capable of operation in a primary mode irrespective of the action of the predetermined response producing means.

Although in certain circumstances advance warning of a transducer fault is sufficient, in many circumstances it is desirable or essential to prevent the system from operating in a potentially dangerous mode because of the transducer fault. Although the operation of the system may be taken out of the potentially damaging or dangerous mode and allowed to re-engage this mode, it is generally preferable to prevent the system from re-entering this mode until remedial action has been taken. Where the mode in question is a secondary mode, and the system is capable of operating in a primary mode which does not rely on correct operation of the transducer for safe or proper operation, the system may be allowed to continue to operate in the primary mode irrespective of the detection of a transducer fault.

In a preferred embodiment of the invention, the system is a motor vehicle and the transducer is sensitive to operation of a vehicle driving brake, such as a foot brake. Preferably the transducer comprises at least one switch, preferably two switches, activated by depression of a brake pedal. Preferably the aspect of performance is reduction of vehicle speed. Preferably, the mode, or secondary mode, of operation is vehicle drive at constant speed (cruise control). The aspect of vehicle performance may, for instance, be any one of the following:

a predetermined reduction in speed, for instance at least 30 Km/h within a predetermined time, for instance 2 seconds;

reduction of vehicle speed to zero a predetermined number of times (for instance three times) at points spaced at least a predetermined vehicle travel distance (for instance 8 Km) apart;

an average deceleration exceeding a predetermined deceleration value, for instance 6 Km/h/s, for a predetermined time, for instance 2 seconds; and

a rate of deceleration exceeding a predetermined rate of deceleration value, for instance 10 Km/h/s within a predetermined period, for instance 1 second.

In each of these cases, the aspect of vehicle performance is virtually certain to have resulted from an application of the brakes and absence of suitable response from the transducer, for instance from the brake switch or from both the brake switches simultaneously, is taken to indicate that the switch or one of the switches has failed. In the case of two switches, even if one switch is operating correctly, its subsequent failure could lead to an undesirable or dangerous situation because failure of the other switch would remove all brake switch protection from a cruise control system. The cruise control, whet-her active or not, should therefore be disabled and should not be allowed to be reconnected until the failed switch has been replaced and the system manually reset to indicate this.

According to a second aspect of the invention, there is provided a system including an apparatus according to the first aspect of the invention.

Preferably the system comprises a vehicle cruise control system.

According to a third aspect of the invention, there is provided a method of monitoring operation of a transducer sensitive to a first control input of a system, comprising determining an aspect of performance of the system which aspect is influenced by the first control input, comparing an output of the transducer representing a status of the first control input with the aspect of system performance, and producing a predetermined response when the comparison represents an inconsistency between the status of the first control input and the aspect of system performance.

The invention will be further described, by way of example, with reference to the accompanying drawings, in which:

Figure 1 shows diagrammatically a brake pedal and brake switches;

Figure 2 is a schematic diagram of an interface arrangement for the brake switches;

Figure 3 is a block schematic diagram of one of the interface circuits shown in Figure 2;

Figure 4 is a Karnaugh map illustrating operation of the brake switches;

Figure 5 is a block schematic diagram of a cruise control system constituting a preferred embodiment of the invention; and

Figures 6 to 9 are flow diagrams illustrating operation of the system shown in Figure 5.

The preferred embodiment described hereinafter illustrates an application of the present invention to a cruise control system for a motor vehicle. However, the present invention may be used in many other applications within the automotive field and in many other technical fields.

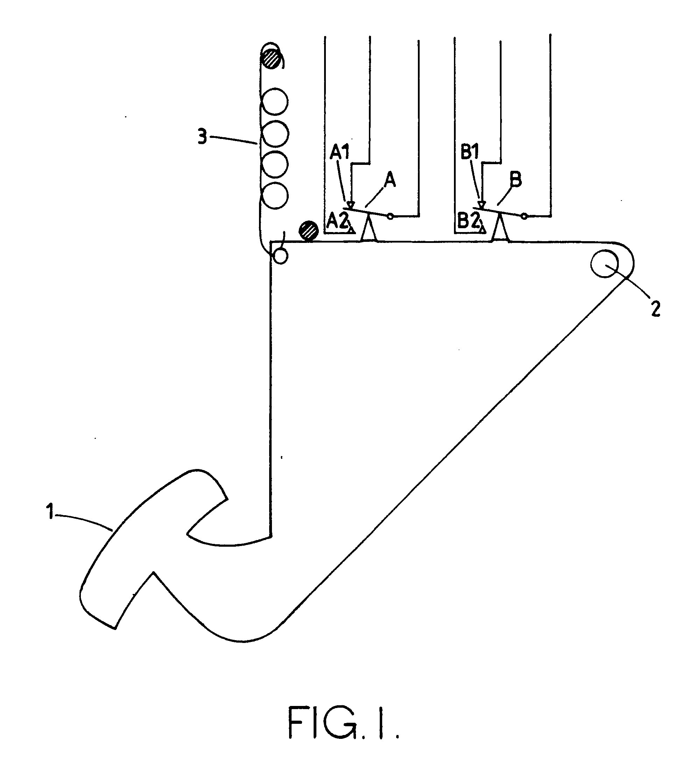

As shown in Figure 1, a brake pedal 1 is mounted on a pivot 2 to a motor vehicle and is provided with a return spring 3 which, together with the vehicle brake system, biases the pedal 1 towards a position in which the brakes are fully released. In order to apply the brakes, the pedal 1 is depressed by the foot of a driver against the return bias of the spring and the remainder of the brake system (not shown).

First and second switches A and B, each of the single pole changeover type, are mounted so as to be actuated by the brake pedal 1. In particular, the switches A and B have contacts Al, A2, B1, B2, which are arranged such that, when the pedal 1 is in its released position as shown in Figure 1, the moving contacts of the switches A and B are in contact with the contacts A1 and B1, respectively, whereas, when the brake pedal 1 is depressed by a predetermined initial amount, the moving contacts of the switches A and B changeover so as to be in contact with the contacts A2 and B2, respectively.

Although the switches A and B are shown as being additional to the normal brake light switch which turns on rear brake lights of the vehicle when the brake is actuated, it is possible to replace one of the switches A and B with the brake light switch so that only one additional brake switch is required.

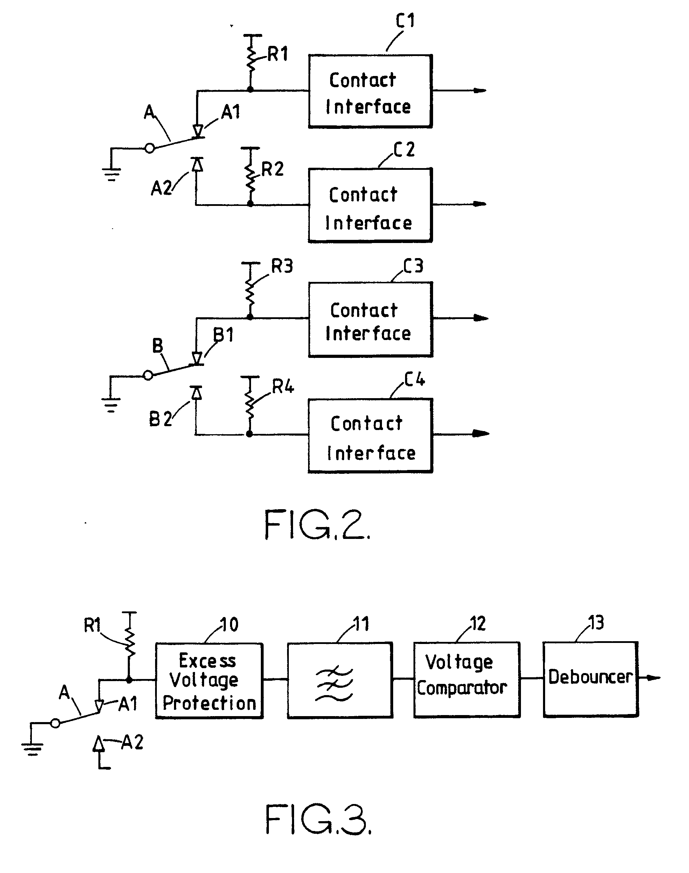

As shown in Figure 2, each of the contacts A1, A2, B1, B2 is provided with its own interface circuit C1, C2, C3, C4, respectively. The moving contacts of the switches A and B are connected to ground whereas each of the fixed contacts is provided with a "pull-up" resistor R1 to R4.

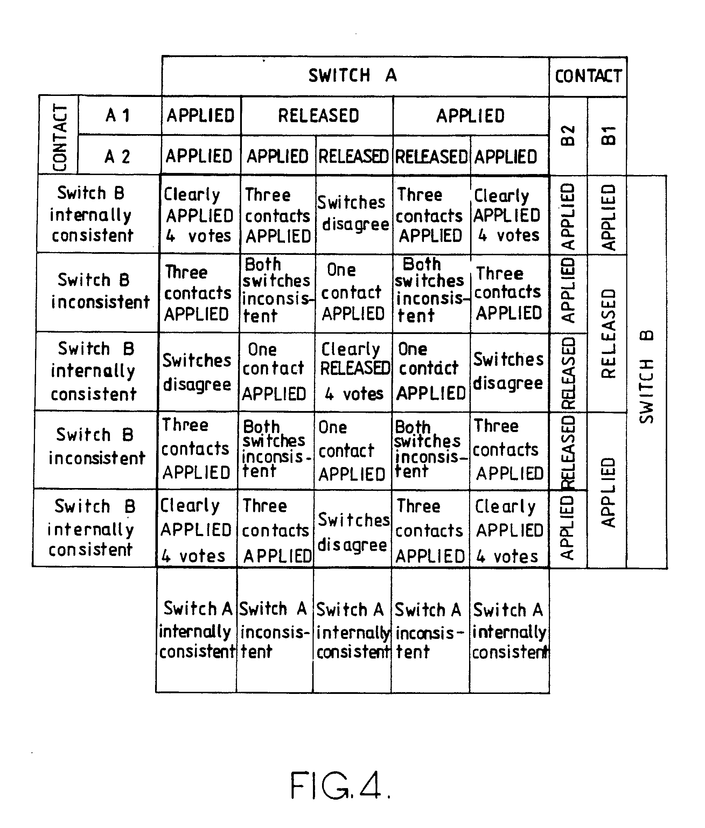

The contact interface circuits are identical to each other and the arrangement of a typical such circuit is shown in Figure 3. The contact A1 is connected to the input of an excess voltage protection circuit 10 which provides protection against excess voltages and transient voltages to the remainder of the circuit. The output of the excess voltage protection circuit 10 is connected to the input of a low pass filter 11 which removes the effects of transient noise and the like. The output of the filter 11 is connected to the input of a voltage comparator 12 which provides interfacing to standard logic levels. The output of the comparator 12 is connected to the input of a de-bouncer circuit 13 which removes the effects of contact bounce. The output of the circuit 13 therefore reliably represents the state of the switch contact.

Although the moving contacts of the switches A and B are shown connected to ground and the fixed contacts are shown provided with pull-up resistors, an alternative arrangement in which the moving contacts are connected to a power supply line and the fixed contacts are provided with pull-down resistors may equally well be used. Also, although the -de-bouncer circuit 13 has been shown as a discrete circuit element, it may be incorporated in subsequent processing electronics and may be arranged to provide a delay of, for instance, 30 milliseconds after a last change of status at the output of the comparator before supplying an output, contact bounce being a transient phenomenon which ceases after such a short period of time.

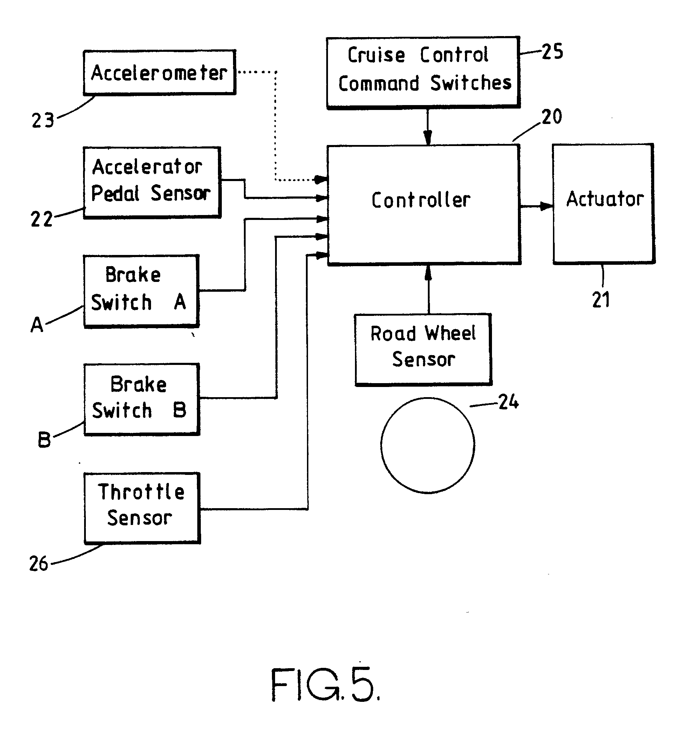

Figure 4 illustrates in the form of a Xarnaugh map all the possible states of the switches A and B. Although it would be sufficient to show only 4 x 4 states, namely those at the bottom right hand corner of Figure 4, in order to illustrate all possible states, the right hand column has been repeated to the left of this 4 x 4 block and the bottom row has been repeated at the top of this block so as to place the "CLEARLY RELEASED 4 votes" at the centre and show the symmetry of the surrounding states. Only one switch contact state is changed when moving from any state to an immediate neighbour in the diagram of Figure 4.

The designations "APPLIED" and "RELEASED" relate to the expected state of the switch contact when the brakes are applied and released, respectively. The switches are said to be internally consistent when both contacts of each switch indicate the same brake states, and inconsistent when the two contacts indicate different brake states.

The switches A and B are provided so as to ensure that the cruise control mode of operation is suspended or deactivated whenever the vehicle brake is applied. Thus, during normal operation, whenever any switch contact indicates that the brakes have been applied, cruise control is suspended. Thus, the only state of the switches A and B in which cruise control is permitted to operate is that in which all of the contacts A1, A2, B1, B2, indicate that the brakes are released, and this is the state indicated by the middle block of the diagram in Figure 4. As described hereinbefore, although in theory the switches A and B can be arranged to be actuated simultaneously, in practice this is not possible. Thus, although theoretically ideal switches would only present the states "CLEARLY APPLIED 4 votes" and "CLEARLY RELEASED 4 votes", in practice the state "SWITCHES DISAGREE" can occur after debouncing, even if the switches are working properly. During abnormal operation of the switches, any of the states shown in the map of Figure 4 may occur.

During normal operation with both switches A and B functioning correctly, it is possible for all of the states shown in Figure 4 to occur, although some of the states would occur only transiently. It is therefore not possible to detect with certainty a failure of either of the switches in accordance with the states of their contacts. Thus, there may be a fault in one of the switches without this being revealed during operation of the brake pedal in normal driving. Such a fault can therefore lie dormant for considerable periods of time and may well only reveal itself when the other switch also fails such that the cruise control is not suspended upon depression of the brake pedal.

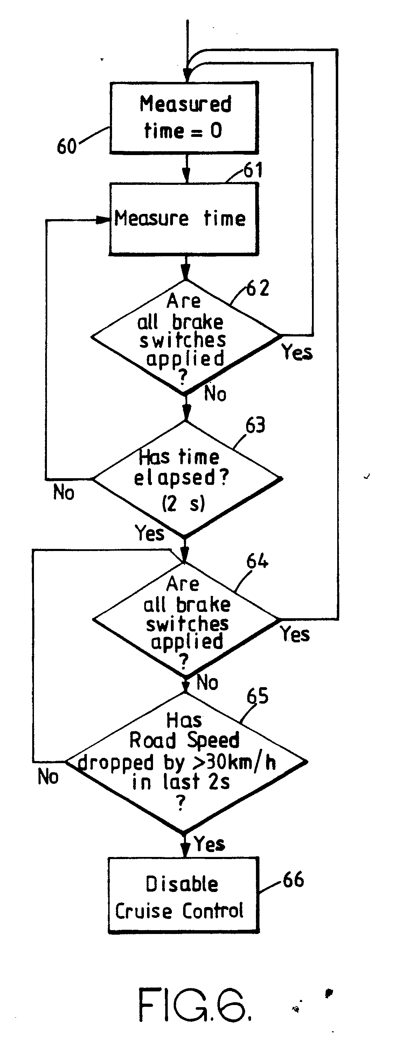

Figure 5 is a block schematic diagram of a cruise control system including or connected to the switches A and B. The system comprises a controller 20, preferably embodied as a microcomputer, whose output is connected to an actuator 21 which controls an engine throttle of a motor vehicle. The controller 20 may perform functions other than cruise control, for instance normal driving control, controlled by an accelerator pedal. The controller 20 has inputs connected to the brake switches A and B, an input connected to an accelerator pedal sensor 22, such as a position or angle sensor, and an input connected to a throttle sensor 26, such as a position of angle sensor. In some systems, a vehicle accelerometer 23 may be provided, and may be connected to another input of the controller 20. The controller 20 has a further input connected to a road wheel sensor 24 which provides a signal representing the vehicle speed and distance. The controller 20 has further inputs connected to cruise control command switches 25 which provide manual control of the cruise control mode of operation, such as selection, suspension, speed setting and speed changing.

During normal operation when cruise control has been selected by one of the switches 25, the controller 20 compares the selected cruise speed with the actual speed detected by the sensor 24 and, on the basis of this comparison, supplies control signals to the actuator 21 for altering the engine throttle opening in order to maintain the vehicle speed at or near to the selected cruise speed. When either or both of the brake switches A and B indicates that the brake pedal has been depressed, the controller 20 suspends temporarily or permanently (ie until manual reselection) cruise control. For instance, if cruise control is suspended until manual reselection, the controller 21 may instead return control of the actuator 21 to the accelerator pedal sensor 22 for manual control. During such manual control, the controller 20 may be arranged to control the actuator 21 as a function of the sensor 22, which function may be a linear function of accelerator pedal position or a more complex function in order to improve one or more aspects of vehicle performance. For instance, the controller 20 may form part of an engine management system responsible for control of ignition and fuelling of an internal combustion engine. The actual position of the actuator 21 is fed back to the controller 20 by the throttle sensor 26 so as to provide servo control.

In order to detect faults in the switches A and B, the controller 20 functions as illustrated in one or all of the flow diagrams shown in Figures 6 to 9. In the event of a faulty switch being detected, the controller 20 disables the cruise control mode of operation and does not permit reselection until the fault has been remedied and the controller reset in order to indicate this. For instance, the cruise control function may be disabled by disconnecting a latching relay. However, it is preferred that the controller resets a pattern of bits in a word in a non-volatile read-write memory, for instance a memory forming part of an engine management system and holding calibration and adjustment parameters during periods of engine inactivity. For instance, a pattern of 0101 0101 may be used to indicate that the cruise control system is functional, and this may be changed to 1010 1010 in order to disable the cruise control function, even though the electronic throttle control system or engine management control system otherwise remains functional. An engine management system may be provided with a module which arbitrates between pedal-following ie control based on the position of the accelerator pedal, cruise control, and traction control, and reads the status of the bit pattern to decide whether cruise control is to be allowed to influence the throttle angle. If one, two or three bits have been altered because of major electrical disturbance, then the state of the original bit pattern is restored. If four bits have been altered, then cruise control is disabled and cannot be reselected until the bit pattern has been returned to 0101 0101 by service personnel when the fault has been rectified.

The controller program module shown in Figure 6, like the other modules shown in the subsequent figures, is performed at frequent intervals. In a step 60, a timer is reset and, at 61, measures elapsed time. A step 62 determines whether both brake switches A and B indicate that the brakes are applied. If so, then control returns to the step 60. If not, a step 63 determines whether the timer has measured an elapsed time of 2 seconds and, if not, control is returned to the step 61. If 2 seconds have elapsed, a step 64 determines whether both brake switches indicate that the brakes have been applied. If so, control returns to the step 60. If not, a step 63 determines whether the road speed as measured by the sensor 24 has fallen by 30 km/h in the previous 2 seconds. If not, control is returned to the step 64. Otherwise, the cruise control is disabled at step 66.

The module shown in Figure 6 thus detects a fault whenever the vehicle speed falls by at least 30 km/h in a 2 second period and either or both switches indicate that the brakes have not been applied. Such a deceleration is most unlikely to occur as a result of non-braked operation of the vehicle, for instance caused by drag, engine braking, or hill-climbing. In practice, such sustained deceleration only results from application of the brakes or a collision and failure of either or both brake switches to detect that the brakes have been applied gives a clear indication that there has been a switch failure. The length of the two second period is needed to prevent any short jerks, for instance caused by pot-holes, from qualifying while being as short as possible so that as many decelerations as possible qualify as valid.

During normal operation of a vehicle, it is very unusual for a driver to bring a car to a halt without the use of the brakes, and this is only likely to occur during hill-climbing which is likely to be followed by a descent during which the brakes will be applied. Certainly, it is most unlikely that a driver would bring a vehicle to a halt several times in succession without applying the brakes. There is a slight risk of a repetitive pattern of halts arising without the brakes being applied during a delivery round on an ascent. To avoid unreliable fault diagnosis, or at least greatly reduce the possibility, a fault may be signalled only when such stops occur at points separated by more than a predetermined vehicle travel distance without the switches giving a clear indication of brake application.

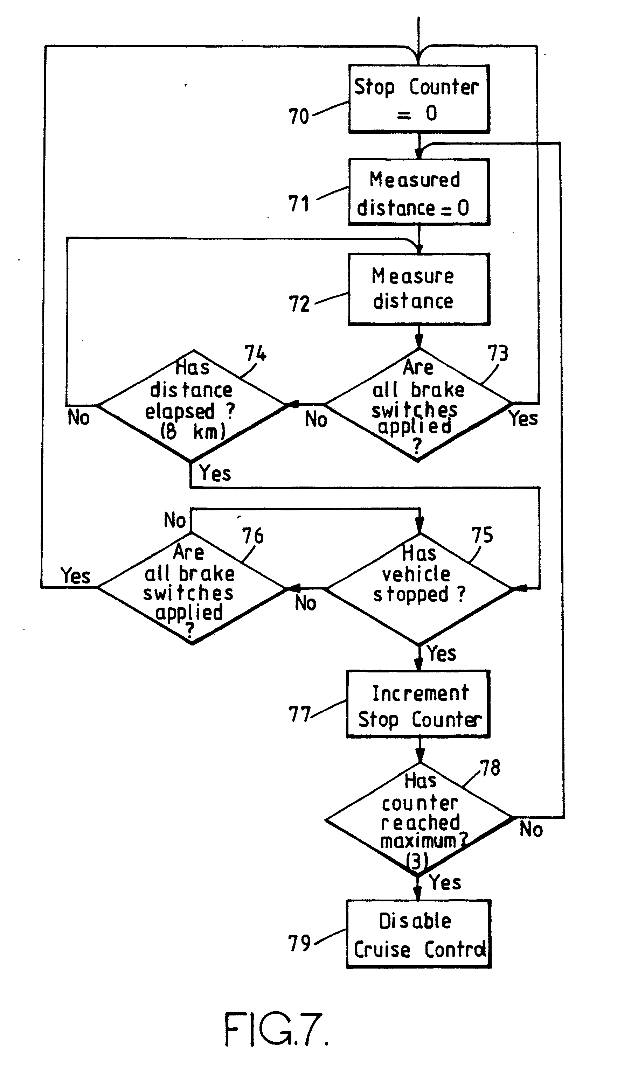

The program module shown in Figure 7 provides such a function. A counter is reset at 70 and a distance measurement is reset at 71. The distance travelled by the vehicle is measured at 72, for instanced based on information supplied by the road wheel sensor 24. The condition of the brake switches is checked at 73 and, if both switches indicate that the brakes have been applied, control is returned to the step 70. If not, a step 74 determines whether the distance travelled by the vehicle has reached 8 kilometres and if not, control is returned to step 72. Otherwise, a step 75 determines whether the vehicle has stopped. If not, a step 76 determines whether both brake switches indicate that the brakes have been applied. If not, control is returned to the step 75. Otherwise, control returns to the step 70.

If the vehicle has stopped, the stop counter is incremented at 77 and a step 78 determines whether the stop counter has reached a maximum value of 3. If not, control returns to the step 70. Otherwise, the cruise control is disabled at 79.

Thus, the module shown in Figure 7 detects whether the vehicle has come to a halt after at least 8 kilometres without both of the brake switches simultaneously indicating that the brakes have been applied at any time.

If this is achieved 3 times without both brake switches showing that the brakes have been applied at any time, then the cruise control is disabled.

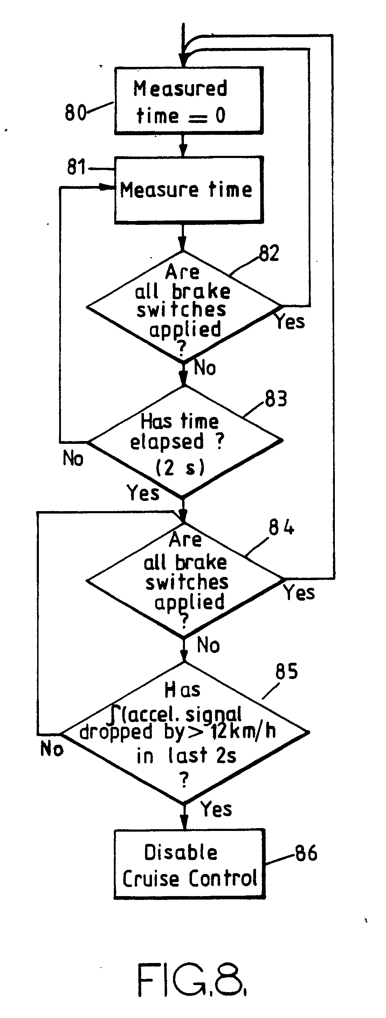

When the accelerometer 23 is provided, more frequent checks can be made of the proper functioning of the brake switches during deceleration. This is possible because the largest component of deceleration achievable without applying the brake (from among drag, engine braking, and gradient) is that caused by hill-climbing. The accelerometer is affected as much by a gradient as the vehicle and is thus sensitive only to acceleration forces imposed by drag, engine braking and the brakes. It is therefore possible to provide a more sensitive test of brake application and a program module for achieving this is shown in Figure 8. A timer is reset at 80 and elapsed time is measured at 81. A step 82 determines whether both brake switches indicate that the brakes have been applied and, if so, control is returned to the step 80. If not, a step 83 determines whether a time of 2 seconds has elapsed and, if not, control is returned to the step 81. Otherwise, a step 84 determines whether both brake switches indicate that the brakes have been applied and, if so, control returns to the step 80. Otherwise, a step 85 determines whether the integral of the accelerometer signal shows that vehicle speed has fallen by 12 km/h in the preceding 2 second elapsed time interval. If not, control is returned to the step 84. Otherwise, the cruise control is disabled at 86.

The program module shown in Figure 6 thus causes cruise control to be disabled if the deceleration over a 2 second period has been greater than 12 km/h without both of the brake switches simultaneously indicating that the brakes have been applied during that period.

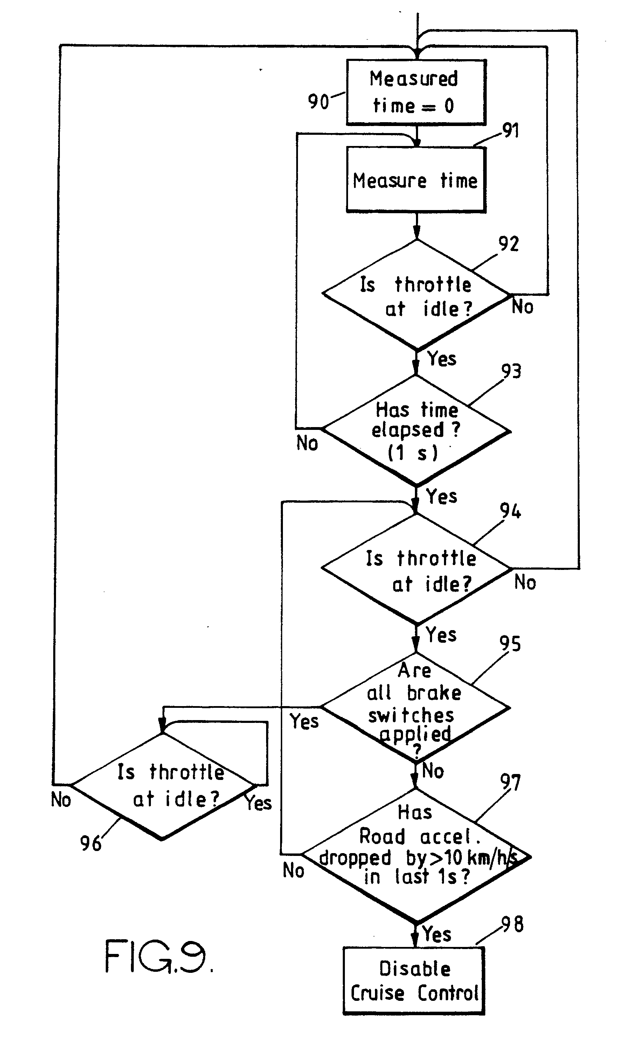

Figure 9 shows a program module which monitors the rate of change of deceleration. A timer is reset at 90 and begins measuring elapsed time at 91. A step 92 determines from the throttle angle sensor 26 whether the throttle is at idle and, if not, returns control to the step 90. Otherwise, a step 93 determines whether a time of 1 second has elapsed and, if not, returns control to the step 91. When 1 second has elapsed, a step 94 determines whether the throttle is at idle and, if not, returns control to the step 90. Otherwise, a step 95 determines whether both the brake switches indicate that the brakes have been applied. If so, a step 95 determines when the throttle is at idle and returns control to the step 90.

If the step 95 determines that either or both brake switches indicates that the brakes have not been applied, a step 97 determines whether the vehicle acceleration has fallen by at least 10 km/h/s in the previous 1 second. If not, control is returned to the step 94. Otherwise, the cruise control is disabled at 98.

The module shown in Figure 9 thus recognises a rate of change of acceleration caused by application of the brakes, which rate is normally much more severe than that encountered due to, for instance, road disturbances. The cruise control is thus disabled if the average rate of change of acceleration has been more negative than -10 km/h/s/s without both of the brake switches simultaneously indicating that the brakgs have been applied.

## Claims

1. An apparatus for monitoring operation of a transducer sensitive to a first control input of a system, characterised by comprising means (20, 22, 23, 24, 26) for determining an aspect of performance of the system which aspect is influenced by the first control input, means (20) for comparing an output of the transducer (A, B) representing a status of the first control input with the aspect of the system performance determined by the determining means (20, 22, 23, 24, 26), and means (20) for producing a predetermined response when the comparison of the comparing means (20) represents an inconsistency between the status of the first control input and the aspect of system performance.

2. An apparatus as claimed in Claim 1, characterised in that the comparing means (20) is arranged to produce the comparison representing an inconsistency in response to absence of the output of the transducer (A, B) and determination by the determining means (20, 22, 23, 24, 26) of a performance aspect which is inconsistent with trie absence of the transducer output.

3. An apparatus as claimed in Claim 1 or 2, characterised in that the response producing means (20) is arranged to provide a fault indication when the comparison of the comparing means (20) represents an inconsistency.

4. An apparatus as claimed in any one of the preceding claims, characterized in that the response producing means (20) is arranged to disengage or disable a predetermined mode of operation of the system.

5. An apparatus as claimed in Claim 4, characterised in that the response producing means (20) is arranged to prevent the predetermined mode of operation from being re-enabled until a manual reset command has been received.

6. An apparatus as claimed in Claim 4 or, 5, in which the system has a primary mode and a secondary mode of operation, characterised in that the predetermined mode is the secondary mode and response producing means (20) is arranged not to disable the primary mode.

7. An apparatus for monitoring operation of a transducer sensitive to operation of a vehicle brake, characterised by comprising means (20, 22, 23, 24, 26) for determining an aspect of vehicle performance influenced by operation of the vehicle brake, means (20) for comparing an output of the transducer (A, B) with the aspect of vehicle performance determined by the determining means (20, 22, 23, 24, 26), and means (20) for producing a predetermined response when the comparison of the comparison means (20) represents an inconsistency between the output of the transducer (A, B) and the aspect of vehicle performance.

8. An apparatus as claimed in Claim 7, characterised in that the transducer comprises at least one switch (A, B) arranged to change state when the vehicle brake is operated.

9. An apparatus as claimed in Claim 7 or 8, characterised in that the determining means (20, 22, 23, 24, 26) is arranged to detect the occurrence of a predetermined reduction of vehicle speed in a predetermined time.

10. An apparatus as claimed in any one of Claims 7 to 9, characterised in that the determining means (20, 22, 23, 24, 26) is arranged to detect the occurrence of reduction of vehicle speed to zero a predetermined number of times at points spaced at least a predetermined vehicle travel distance apart.

11. An apparatus as claimed in any one of Claims 7 to 10, characterised in that the determining means (20, 22, 23, 24, 26) is arranged to detect the occurrence of an average deceleration exceeding a predetermined deceleration value for a predetermined time.

12. An apparatus as claimed in any one of Claims 7 to 11, characterised in that the determining means (20, 22, 23, 24, 26) is arranged to detect the occurrence of a rate of deceleration exceeding a predetermined rate of deceleration value within a predetermined time interval.

13. An apparatus as claimed in any one of Claims 7 to 12, characterised in that the response producing means (20) is arranged to disengage or disable cruise control operation of the vehicle.

14. An apparatus as claimed in Claim 13, characterised in that the response producing means (20) is arranged to prevent re-engagement of cruise control operation of the vehicle until a manual reset command has been received.

15. A method of monitoring operation of a transducer sensitive to a first control input of a system, comprising determining an aspect of performance of the system which aspect is influenced by the first control input, comparing an output of the transducer representing a status of the first control input with the aspect of system performance, and producing a predetermined response when the comparison represents an inconsistency between the status of the first control input and the aspect of system performance.

FIG. I.

FIG.2.

FIG.3.

| CONTACT | | SWITCH A | | | | | CONTACT | | SWITCH B |
|---|---|---|---|---|---|---|---|---|---|
| | A 1 | APPLIED | RELEASED | | APPLIED | | B 2 | B 1 | |
| | A 2 | APPLIED | APPLIED | RELEASED | RELEASED | APPLIED | | | |
| Switch B internally consistent | | Clearly APPLIED 4 votes | Three contacts APPLIED | Switches disagree | Three contacts APPLIED | Clearly APPLIED 4 votes | APPLIED | APPLIED | |
| Switch B inconsistent | | Three contacts APPLIED | Both switches inconsistent | One contact APPLIED | Both switches inconsistent | Three contacts APPLIED | APPLIED | RELEASED | |
| Switch B internally consistent | | Switches disagree | One contact APPLIED | Clearly RELEASED 4 votes | One contact APPLIED | Switches disagree | RELEASED | RELEASED | SWITCH B |
| Switch B inconsistent | | Three contacts APPLIED | Both switches inconsistent | One contact APPLIED | Both switches inconsistent | Three contacts APPLIED | RELEASED | APPLIED | |
| Switch B internally consistent | | Clearly APPLIED 4 votes | Three contacts APPLIED | Switches disagree | Three contacts APPLIED | Clearly APPLIED 4 votes | APPLIED | APPLIED | |
| | | Switch A internally consistent | Switch A inconsistent | Switch A internally consistent | Switch A inconsistent | Switch A internally consistent | | | |

FIG.4.

FIG.5.

60 — Measured time = 0

61 — Measure time

62 — Are all brake switches applied ? — Yes / No

63 — Has time elapsed? (2 s) — No / Yes

64 — Are all brake switches applied ? — Yes / No

65 — Has Road Speed dropped by >30km/h in last 2s ? — No / Yes

66 — Disable Cruise Control

FIG.6.

FIG.7.

FIG.8.

FIG.9.